Europäisches Patentamt

European Patent Office

Office européen des brevets

(11) Publication number: **0 080 545**

**B1**

(12) **EUROPEAN PATENT SPECIFICATION**

(45) Date of publication of patent specification: **11.03.87**

(21) Application number: **81730119.5**

(22) Date of filing: **26.11.81**

(51) Int. Cl.⁴: **B 23 F 21/28**

(54) **Composite shaving cutter.**

(43) Date of publication of application:
**08.06.83 Bulletin 83/23**

(45) Publication of the grant of the patent:
**11.03.87 Bulletin 87/11**

(84) Designated Contracting States:
**DE FR GB**

(56) References cited:
**DE-B-1 037 812**
**DE-B-1 627 347**
**DE-B-1 652 797**
**FR-A-1 104 135**
**US-A-2 119 298**
**US-A-2 171 325**
**US-A-2 228 968**
**US-A-2 667 090**
**US-A-3 505 911**

(73) Proprietor: **MITSUBISHI JUKOGYO KABUSHIKI KAISHA**
**5-1, Marunouchi 2-chome Chiyoda-ku Tokyo (JP)**

(72) Inventor: **Nakaoka, Saburo c/o Kyoto Machinery Works**
**Mitsubishi Jukogyo K.K. 1, Uzumasatatsumi-cho Ukyo-ku Kyoto City Kyoto (JP)**
Inventor: **Iuchi, Fumio c/o Kyoto Machinery Works**
**Mitsubishi Jukogyo K.K. 1, Uzumasatatsumi-cho Ukyo-ku Kyoto City Kyoto (JP)**

(74) Representative: **Meissner, Peter E., Dipl.-Ing. et al**
**Herbertstrasse 22**
**D-1000 Berlin 33 (DE)**

Courier Press, Leamington Spa, England.

## Description

The present invention relates to a gear shaving cutter consisting of a clamped stack of thin circular metallic plates (8) having teeth formed on their periphery.

It is well known to effect a shaving on a gear cut and processed from a gear blank by a hobbing machine, in order to further enhance the final precision of the gear surface. This shaving is achieved generally by means of a gear type shaving cutter. The teeth face of the shaving cutter has a serration consisting of a multiplicity of grooves of an extremely small width extending over the root and the top of the tooth, and the finish cutting of the processed gear is made by the serration edge which functions as a cutting edge.

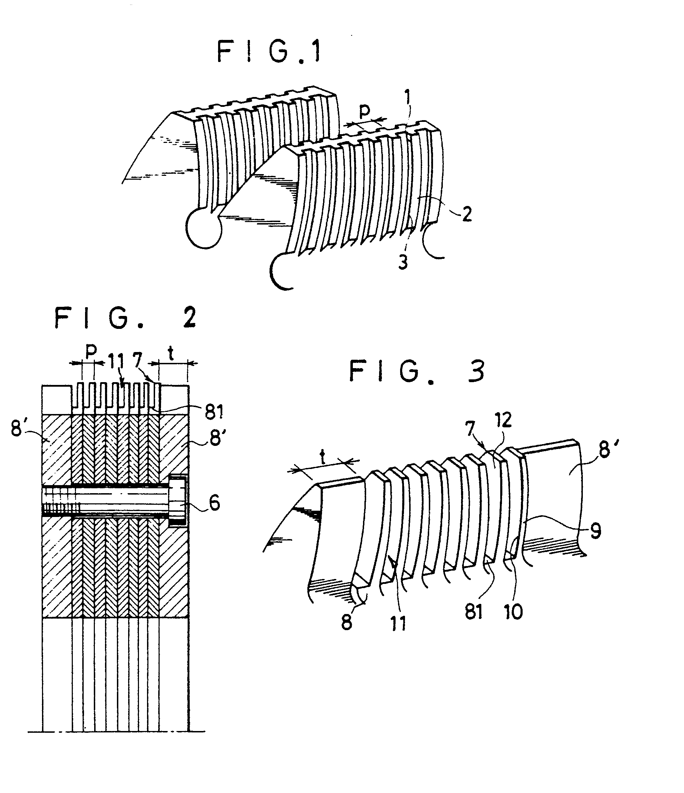

Fig. 1 shows in a larger scale the serrations formed on both tooth faces of a tooth of a conventional gear type shaving cutter, said example is comparable with cutters disclosed in FR—A—11 04 135 and DE—B—16 52 797. In this figure, the side surface 1 constituting the serration corresponds to a top rake surface of the serration during the cutting. On the other hand, the discontinuous tooth face 2 is referred to as "serration land" and corresponds to a relieving surface during the cutting. A reference numeral 3 designates a serration edge.

In this conventional shaving cutter, the serration pitch P is as small as 2 mm, so that it is extremely difficult to finish the serration face (top rake surface) 1 by grinding.

In order to improve the cutting quality of the shaving cutter, it is necessary to precisely finish the top rake surface 1. In the conventional shaving cutter, however, the precision of the top rake surface cannot be improved to a level below 6 μm, because the finish grinding cannot be adopted although the top rake surface is finally processed before a heat treatment.

Accordingly, an object of the invention is to make it possible to easily grind the serration surface of the shaving cutter thereby to improve the cutting quality or performance of the shaving cutter and to improve the precision of tooth face of the gear to be processed. To this end, accordingly to the invention, there is provided a composite shaving cutter of the known type, characterised by spaces provided between adjacent plates by means of reduced thickness of each plate in the toothed portion.

The invention will be more fully understood from the following description of the preferred embodiment of the invention taken in conjunction with the accompanying drawings.

Fig. 1 is a perspective view of the serration portion of a conventional integral type shaving cutter;

Fig. 2 is a sectional view of a half part of a shaving cutter according to the embodiment taken along the axis of the shaving cutter and

Fig. 3 is a perspective view of the serration portion of the shaving cutter as shown in Fig. 2.

In embodiment as shown in Fig. 2 and 3 teeth of the same shape as the teeth of the shaving cutter are formed on the periphery of a thin disc-shaped plate of a thickness corresponding to the serration pitch P thereby to form a gear-shaped thin plate. Then, the teeth are cut leaving a thickness necessary for constituting the serration land to form a step 81 and the cut surfaces of the teeth are finished by grinding thereby to form a stepped gear-shaped blade 8 which is an element of the shaving cutter of the third embodiment. The blades 8 thus formed are superposed and united rigidly by means of the bolt 6, thereby to form a composite shaving cutter in which the multiplicity of teeth form the serration.

In Fig. 3, a reference numeral 9 designates a serration land, while a reference numeral 10 denotes a serration edge (cutting edge). The portion of the teeth from which the material has been removed by the cutting constitute spaces corresponding to the serration gaps as designated at 11.

As will be seen from Figs. 2 and 3, the blades 8' disposed at both ends of the cutter teeth are made to have a thickness (t) greater than that of other blades 8 thereby to ensure a sufficient rigidity of the cutter teeth as a whole.

Instead of using the bolt 6, it is possible to use a holder (not shown) in which the blades are fixedly mounted, thereby to form the shaving cutter of this third embodiment. In the shaving cutter of this embodiment, the cutting performance during the shaving is improved because both surfaces 12 of the teeth 7 of each blade 8, constituting the top rake surfaces during cutting, have been beforehand finished by grinding. In addition, since vacant space 11 is formed between adjacent teeth 7 without using any spacer the cutting liquid can flow easily during processing, and the removal of metal chips is facilitated.

In addition, the blade thickness, i.e. the pitch P of the serration, is increased so that the number of the blades can be reduced almost to a half. In consequence, it becomes possible to greatly shorten the production time and to reduce the production cost. In addition, the increased thickness of the blade permits an easier removal or suppression of the stress in the course of the heat-treatment during manufacturing.

In the case where the teeth size is increased to reduce its mechanical strength, it is advisable to charge a filler such as a hard resin in the space 11 between adjacent teeth 7 and to harden the filler, thereby to reinforce the teeth. However, it is necessary to dissolve the filler in the region around the cutting edges 10, in order to expose the top rake surfaces 12 by the required shape and size.

As has been described, there is provided a composite shaving cutter in which a plurality of gear-shaped thin plates are superposed to form the serration. It is, therefore, possible to beforehand finish by grinding the serration side surfaces corresponding to the top rake surfaces, before assembling the gear thin plates into one body. In consequence, it becomes possible to obtain a shaving cutter having a smoothly finished top rake surfaces and, accordingly, to improve the precision of processing of the gear particularly the precision of the tooth face, when the gear is processed by the shaving cutter of the invention.

## Claims

1. A gear shaving cutter consisting of a clamped stack of thin circular metallic plates (8) having teeth formed on their periphery, characterized in that spaces (11) are provided between adjacent plates by means of reduced thickness of each plate in the toothed portion.

2. A gear as claimed in claim 1, wherein said spaces (11) are filled with hard resin, leaving the cutting edges intact.

## Patentansprüche

1. Zahnrad-Schaber bestehend aus einem Stapel dünner kreisförmiger Metallplatten (B) mit an ihrem Umfang ausgebildeten Zähnen, dadurch gekennzeichnet, daß zwischen benachbarten Platten durch verringerte Dicke jeder Platte im gezahnten Bereich Zwischenräume (11) vorgesehen sind.

2. Zahnrad-Schaber nach Anspruch 1, dadurch gekennzeichnet, daß die Zwischenräume (11) mit hartem Harz gefüllt sind, wobei die Schniedkanten unversehrt geblieben sind.

## Revendications

1. Outil de rasage d'engrenage constitué d'une pile serrée de plaques métalliques circulaires minces (8) ayant des dents formées sur leur périphérie, caractérisé en ce que des espaces (11) sont prévus entre des plaques adjacentes en réduisant l'épaisseur de chaque plaque dans la partie dentée.

2. Outil selon la revendication 1, dans lequel. lesdits espaces (11) sont remplis d'une résine dure, en laissant les bords de fraisage intacts.

0 080 545

F I G .1

F I G . 2

F I G . 3

1